# EUROPEAN PATENT APPLICATION

(11) **EP 4 786 217 A1**
(43) Date of publication of application: **05.08.2026**
(21) Application number: 24870097.3
(22) Date of filing: 02.08.2024
(51) Int. Cl.: B60G 17/052, B60C 23/16

(54) **INTEGRATED ADJUSTMENT SYSTEM AND VEHICLE**

(30) Priority: 26.09.2023 CN 202311281343
(71) Applicant: BYD Company Limited, Shenzhen, Guangdong 518118 (CN)
(72) Inventor: GUAN, Zhuohui, Shenzhen, Guangdong 518118 (CN); LIAO, Yinsheng, Shenzhen, Guangdong 518118 (CN); ZHANG, Hongzhou, Shenzhen, Guangdong 518118 (CN); ZHANG, Feng, Shenzhen, Guangdong 518118 (CN); CHEN, Jinying, Shenzhen, Guangdong 518118 (CN)
(74) Representative: Taor, Simon Edward William
(86) International application number: PCT/CN2024/109493
(87) International publication number: WO 2025/066548

(57) **Abstract**

Disclosed are an integrated adjustment system and a vehicle. The integrated adjustment system is applied to a vehicle. The integrated adjustment system includes: a first gas receiving apparatus and a second gas receiving apparatus, where the first gas receiving apparatus is configured to implement a first function, the second gas receiving apparatus is configured to implement a second function, and the first function is different from the second function; a gas supply apparatus; and a drying unit (43), where the gas supply apparatus is connected to the drying unit (43), the drying unit (43) is connected to the first gas receiving apparatus, a regeneration pipe (41) is disposed in the drying unit (43), and the regeneration pipe (41) is configured to exhaust blowback gas from the drying unit (43), to supply gas to the second gas receiving apparatus through the blowback gas.

## Description

### CROSS-REFERENCE TO RELATED APPLICATIONS

This application claims priority to Chinese Patent Application No. 202311281343.5, filed on September 26, 2023, which is incorporated herein by reference in its entirety.

### TECHNICAL FIELD

This application relates to the field of vehicle adjustment technologies, and more specifically, to an integrated adjustment system and a vehicle.

### BACKGROUND

A suspension system of a vehicle adjusts a height by disposing an air suspension. An air compressor is configured to supply gas to the air suspension. To ensure that gas is dry, a drying unit is usually disposed at a gas outlet of the air compressor. The drying unit removes moisture from gas supplied by the air compressor by using a molecular sieve adsorption principle. The drying unit needs to purge gas from a molecular sieve through blowback. In a conventional technology, blowback gas is usually exhausted out of a vehicle, resulting in waste of gas.

Therefore, a new technical solution needs to be provided to resolve the foregoing technical problem.

### SUMMARY

This application is intended to resolve at least one of technical problems in a related technology to some extent.

Therefore, an objective of this application is to provide an integrated adjustment system.

Another objective of this application is to provide an integrated adjustment system.

Another objective of this application is to provide a vehicle.

Another objective of this application is to provide a vehicle.

According to a first aspect of this application, an integrated adjustment system is provided and applied to a vehicle. The integrated adjustment system includes:
a first gas receiving apparatus and a second gas receiving apparatus, where the first gas receiving apparatus is configured to implement a first function, the second gas receiving apparatus is configured to implement a second function, and the first function is different from the second function;
a gas supply apparatus; and
a drying unit, where the gas supply apparatus is connected to the drying unit, the drying unit is connected to the first gas receiving apparatus, a regeneration pipe is disposed in the drying unit, and the regeneration pipe is configured to exhaust blowback gas from the drying unit, to supply gas to the second gas receiving apparatus through the blowback gas.

According to the integrated adjustment system in this application, gas is supplied to the second gas receiving apparatus through the blowback gas from the drying unit. In this manner, a drying capacity of the drying unit is recycled through blowback, regeneration effect of the drying unit is improved as an amount of blowback gas per unit time increases. Furthermore, this improves utilization of the blowback gas, and avoids waste of the blowback gas. In addition, only one gas supply apparatus needs to be disposed to meet gas supply requirements of the first gas receiving apparatus and the second gas receiving apparatus, thereby reducing a volume of an integrated adjustment apparatus.

According to a second aspect of this application, an integrated adjustment system is provided. The system includes a suspension apparatus, an adjustment apparatus for a seat, a tire inflation apparatus, a gas supply apparatus, and a drying unit. The gas supply apparatus is connected to the drying unit. The drying unit is connected to the suspension apparatus, the drying unit has a regeneration pipe, and the regeneration pipe is configured to exhaust blowback gas from the drying unit, to supply gas to the adjustment apparatus for the seat and the tire inflation apparatus through the blowback gas.

According to the integrated adjustment system in this application, the foregoing gas supply apparatus may be used. The adjustment apparatus for the seat is configured to adjust a side bolster of a seat, to adjust a posture of an occupant when a vehicle turns, reducing a tilt of the occupant and improving driving experience. The suspension apparatus is configured to adjust a height of a vehicle body based on a road condition, to ensure passability of the vehicle, reduce the wind resistance of the vehicle, and the like. The tire inflation apparatus is configured to inflate a tire. In addition, the adjustment apparatus for the seat, the tire inflation apparatus, and the suspension apparatus share one gas supply apparatus. This significantly reduces a total volume of the integrated adjustment system, saves interior space in the vehicle, and reduces vehicle costs.

According to a third aspect of this application, a vehicle is provided. The vehicle includes the integrated adjustment system according to any one of the foregoing implementations.

The vehicle in this application is characterized by a high integration level, and can adjust a seat and a height of a vehicle body.

According to a fourth aspect of this application, a vehicle is provided. The vehicle includes the foregoing integrated adjustment system, where a first pressure limiting valve is disposed on the second pipeline, the adjustment apparatus for the seat includes an airbag that is located behind a side bolster of the seat, the airbag is connected to the second pipeline, and a first valve and a second valve are disposed on the second pipeline, the first valve is configured to control gas intake to the airbag, and the second valve is configured to control gas exhaust from the airbag.

The first pressure limiting valve and the first valve are configured to open when obtaining a signal indicating the vehicle turns, to inflate the airbag behind the side bolster on a tilted side.

According to the vehicle in this application, when the vehicle turns, an occupant body is tilted to support the waist of the occupant, avoiding a tilt of the occupant.

Additional aspects and advantages of this application are partially presented in the following descriptions, partially become clear in the following descriptions, or are learned of through practice of this application.

### BRIEF DESCRIPTION OF DRAWINGS

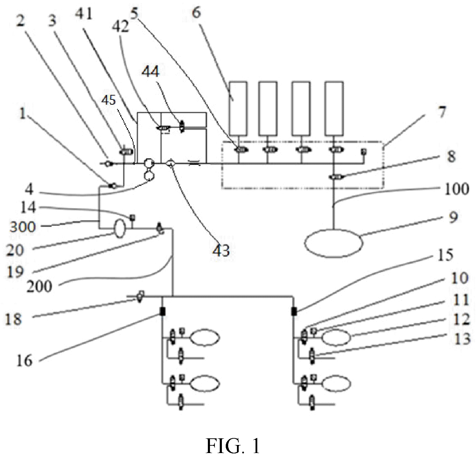

FIG. 1 is a diagram of an integrated adjustment system according to an embodiment of this application.

### DESCRIPTION OF EMBODIMENTS

Example embodiments of this application are described in detail with reference to the accompanying drawings. It should be noted that, unless otherwise specified, relative arrangements, numerical expressions, and values of components and steps described in these embodiments do not limit the scope of this application.

The following description of at least one example embodiment is merely illustrative and shall not be construed as any limitation to this application, and application or use thereof.

Technologies, methods, and devices known by a person of ordinary skill in the art may not be discussed in detail, but the technologies, methods, and devices shall be considered as a part of this specification in appropriate circumstances.

In all examples shown and discussed herein, any specific value should be construed as merely an example rather than a limitation. Therefore, other examples of example embodiments may have different values.

It should be noted that, similar reference numerals and letters represent similar items in the following accompanying drawings. Therefore, once an item is defined in one accompanying drawing, the item does not need to be further discussed in the following accompanying drawings.

According to an embodiment of this application, an integrated adjustment system is provided and applied to a vehicle. As shown in FIG. 1, the system includes: a first gas receiving apparatus, a second gas receiving apparatus, a gas supply apparatus, and a drying unit 43. The first gas receiving apparatus is configured to implement a first function, the second gas receiving apparatus is configured to implement a second function, and the first function is different from the second function.

The gas supply apparatus is connected to the drying unit 43, the drying unit 43 is connected to the first gas receiving apparatus, a regeneration pipe 41 is disposed in the drying unit 43, and the regeneration pipe 41 is configured to exhaust blowback gas from the drying unit 43, to supply gas to the second gas receiving apparatus through the blowback gas.

Specifically, the gas supply apparatus is configured to supply gas, such as nitrogen, compressed air, or inert gas. For example, the gas supply apparatus includes an air compressor. The first gas receiving apparatus and the second gas receiving apparatus are gas receiving and utilizing apparatus. The first gas receiving apparatus utilizes gas to implement the first function. The second gas receiving apparatus utilizes gas to implement the second function. The first function and the second function include, for example, height adjustment of the vehicle body, seat position adjustment, horn activation, tire inflation, or pneumatic valve control. The first function is different from the second function. The drying unit 43 is configured to remove moisture from gas supplied by the gas supply apparatus. The drying unit 43 has a gas inlet and a gas outlet. The gas inlet is connected to the gas supply apparatus, to receive high-pressure gas exhausted from the air compressor. The gas outlet is connected to the first gas receiving apparatus, to supply the dried high-pressure gas to the first gas receiving apparatus. A molecular sieve is disposed in the drying unit 43, and the molecular sieve may be a silicate molecular sieve. The silicate molecular sieve may be, but is not limited to, crystalline potassium aluminosilicate, crystalline sodium aluminosilicate, crystalline calcium aluminosilicate, or the like. There are pores inside the molecular sieve, and when gas passes through the molecular sieve, moisture enters the pores. In this manner, the drying unit 43 can remove moisture from the gas.

When excess moisture is adsorbed by the molecular sieve, the pores can no longer accommodate additional moisture, leading to a decrease in a moisture adsorption capacity of the molecular sieve. The molecular sieve has high moisture content near the gas inlet of the drying unit 43, and low moisture content near the gas outlet. Therefore, moisture adsorbed by the molecular sieve needs to be discharged out of the drying unit 43 through blowback, to regenerate the molecular sieve. Gas used for blowback in the drying unit 43 is blowback gas. Blowback usually means exhausting dried high-pressure gas near the gas inlet of the drying unit 43, to remove the moisture adsorbed by the molecular sieve. For example, the gas may be directly exhausted from the gas inlet of the drying unit 43, or a blowback outlet may be provided near the gas inlet of the drying unit 43, and the gas may be exhausted from the blowback outlet.

The regeneration pipe 41 is connected to the gas inlet of the drying unit 43 or the blowback outlet. The blowback gas is exhausted through the regeneration pipe 41 and supplied to the second gas receiving apparatus for use.

In this example, gas is supplied to the second gas receiving apparatus through the blowback gas from the drying unit 43. In this manner, a drying capacity of the drying unit 43 is recycled through blowback, and regeneration effect of the drying unit 43 is improved as an amount of blowback gas per unit time increases. Furthermore, this improves utilization of the blowback gas, and avoids waste of the blowback gas.

In addition, only one gas supply apparatus needs to be disposed to meet gas supply requirements of the first gas receiving apparatus and the second gas receiving apparatus, thereby reducing a volume of an integrated adjustment apparatus.

In an example, the integrated adjustment apparatus further includes a third gas receiving apparatus, the regeneration pipe 41 is configured to exhaust the blowback gas from the drying unit 43, to supply gas to the third gas receiving apparatus through the blowback gas, the third gas receiving apparatus is configured to implement a third function, and the third function is different from the first function and the second function.

In this example, the gas supply apparatus supplies gas to the first gas receiving apparatus. The blowback gas exhausted from the regeneration pipe 41 is used to supply the second gas receiving apparatus and the third gas receiving apparatus. One gas supply apparatus meets gas consumption requirements of the three gas receiving apparatuses, thereby further reducing the volume of the integrated adjustment system.

In an example, each of the first gas receiving apparatus, the second gas receiving apparatus, and/or the third gas receiving apparatus is a component of the vehicle. For example, the gas receiving apparatus may be, but is not limited to, a component that implements lifting and lowering of the vehicle body, a component that implements tire inflation, a component that implements horn activation, a component that implements seat adjustment, a component that implements steering, or the like. A person skilled in the art may select the first gas receiving apparatus, the second gas receiving apparatus, and the third gas receiving apparatus according to an actual requirement.

In an example, the first gas receiving apparatus is one or more of the following: a suspension apparatus, an adjustment apparatus for a seat, and a tire inflation apparatus;
the second gas receiving apparatus is one or more of the following: the suspension apparatus, the adjustment apparatus for the seat, and the tire inflation apparatus; and
the third gas receiving apparatus is one or more of the following: the suspension apparatus, the adjustment apparatus for the seat, and the tire inflation apparatus.

In this example, the gas supply apparatus can directly supply gas to at least one of the suspension apparatus, the adjustment apparatus for the seat, and the tire inflation apparatus. Certainly, the first gas receiving apparatus, the second gas receiving apparatus, and the third gas receiving apparatus are not limited to the foregoing embodiments, and may alternatively be another gas-requiring apparatus of the vehicle. This may be set by a person skilled in the art according to an actual requirement.

Specifically, the adjustment apparatus for the seat is configured to adjust a side bolster of the seat. The adjustment apparatus for the seat is configured to adjust a posture of an occupant when a vehicle turns, reducing a tilt of the occupant and improving driving experience.

The suspension apparatus is configured to adjust a height of a vehicle body based on a road condition, to ensure passability of the vehicle, reduce the wind resistance of the vehicle, and the like.

In this embodiment of this application, the gas supply apparatus is configured to supply high-pressure gas for the suspension apparatus, the adjustment apparatus for the seat, or the tire inflation apparatus. Gas pressure may be set according to an actual requirement.

Certainly, a person skilled in the art may set the gas supply apparatus according to an actual requirement, which is not limited to the foregoing embodiment.

The adjustment apparatus for the seat, the tire inflation apparatus, and the suspension apparatus all provide support force through the high-pressure gas, to separately adjust the seat and the vehicle body.

The adjustment apparatus for the seat includes an airbag. The airbag abuts against the seat (for example, the side bolster of the seat). After inflation, the airbag expands in volume and presses against the seat, thereby changing a shape of the seat. After deflation, the airbag reduces in volume, and no longer presses against the seat, and the seat returns to an initial state.

The suspension apparatus includes an air spring 6. The air spring 6 expands in volume as gas pressure increases, to provide force to lift the vehicle body, thereby increasing the height of the vehicle body. The height of the vehicle body gradually decreases as the gas pressure decreases.

The tire inflation apparatus is configured to inflate a tire of the vehicle. For example, the tire inflation apparatus includes an inflation pipe and a wheel side valve, and the inflation pipe and the wheel side valve are connected. The inflation pipe is connected to the gas supply apparatus. The wheel side valve is configured to control opening and closing of an air valve of the tire.

In a conventional technology, to supply gas to the airbag and the tire inflation apparatus, an air compressor usually needs to be independently disposed. The air compressor is connected to the airbag and the tire inflation apparatus. To supply gas to the air spring 6, an air compressor usually needs to be independently disposed, and the air compressor is connected to the air spring; or an air compressor and a gas storage tank are independently disposed, the air compressor supplies gas to the gas storage tank, and the gas storage tank supplies high-pressure gas to the air spring 6. The three air compressors 4 and the gas storage tanks greatly increase the volume of the integrated adjustment system and occupy interior space in the vehicle.

When the first gas receiving apparatus, the second gas receiving apparatus, and the third gas receiving apparatus are any combination of the suspension apparatus, the adjustment apparatus for the seat, and the tire inflation apparatus. One gas supply apparatus can meet gas supply requirements of the adjustment apparatus for the seat, the suspension apparatus, and the tire inflation apparatus. This significantly reduces a total volume of the integrated adjustment system, saves interior space in the vehicle, and reduces vehicle costs.

In addition, three systems may be controlled by using one control apparatus, for example, functions of the adjustment apparatus for the seat and the tire inflation apparatus may be integrated into a control apparatus of the suspension apparatus. Therefore, there is no need to provide three independent control apparatuses, further reducing the vehicle costs.

In an example, as shown in FIG. 1, the gas supply apparatus includes a gas generation unit and a first gas storage unit 9, the gas generation unit is configured to supply gas to the first gas storage unit 9 through the drying unit 43, and the blowback gas from the drying unit 43 is from the first gas receiving apparatus and/or the first gas storage unit 9.

For example, the gas generation unit is the air compressor 4. Certainly, the gas generation unit may alternatively be a nitrogen compressor, an inert gas compressor, or the like. The first gas storage unit 9 is configured to store gas, for example, the first gas storage unit is a gas storage tank. In this example, the first gas storage unit 9 can store gas, to supply gas to the first gas receiving apparatus. Compared with the gas generation unit, the first gas storage unit 9 can continuously supply a large amount of gas. During intermittent gas supply, frequent turning on and off of the gas generation unit is avoided.

In addition, during gas exhaust, the first gas receiving apparatus can provide blowback gas for the drying unit 43 for blowback, so that high-pressure gas in the first gas receiving apparatus can be reused, thereby improving utilization of the gas. Gas in the first gas storage unit can also be used as the blowback gas from the drying unit 43, thereby ensuring high blowback efficiency of the drying unit 43.

The blowback gas from the drying unit 43 may be directly supplied to the second gas receiving apparatus through the regeneration pipe 41. Alternatively, the blowback gas passes through the drying unit 43 and the regeneration pipe 41, and is stored and then supplied to the second gas receiving apparatus when the second gas receiving apparatus has a gas supply requirement.

In an example, the molecular sieve in the drying unit 43 is regenerated by conducting blowback a plurality of times.

An amount of gas required by the drying unit 43 for blowback is usually a part of gas intake of the first gas receiving apparatus and/or the first gas storage unit 9, provided that gas leakage from the first gas receiving apparatus and/or the first gas storage unit 9 is ensured to not exceed an amount of gas that is not used for blowback in the first gas receiving apparatus and/or the first gas storage unit 9. Even if the gas leakage is excessive, and even exceeds the amount of gas that is not used for blowback, the molecular sieve in the drying unit 43 may be regenerated by conducting blowback the plurality of times. The moisture adsorbed by the molecular sieve can be discharged more efficiently by conducting blowback the plurality of times, so that the molecular sieve in the drying unit 43 can be regenerated more effectively.

In an example, the integrated adjustment system includes a gas generation unit, a first gas storage unit 9, and a second gas storage unit 20; the gas generation unit supplies gas to the first gas storage unit 9 through the drying unit 43; the first gas receiving apparatus and/or the first gas storage unit 9 are/is configured to supply the blowback gas to the second gas storage unit 20 and/or the second gas receiving apparatus through the regeneration pipe 41.

As shown in FIG. 1, the gas generation unit is the air compressor 4. Both the first gas storage unit 9 and the second gas storage unit 20 are gas storage tanks. Usually, a volume of the first gas storage unit 9 is larger than that of the second gas storage unit 20. Gas pressure of the first gas storage unit 9 is greater than that of the second gas storage unit 20. When the gas pressure of the first gas storage unit 9 is less than a specified value, the gas generation unit is started to supply gas to the first gas storage unit 9. The air compressor 4 and the first gas storage unit 9 are connected to the first gas receiving apparatus through the first pipeline 100. The drying unit 43 is connected to a par that is of the first pipeline 100 and that is located between the air compressor 4 and the first gas receiving apparatus.

When the gas pressure of the second gas storage unit 20 is less than a specified value, the first gas storage unit 9 is turned on, to supply gas to the second gas storage unit 20, and/or gas is exhausted from the first gas receiving apparatus to supply gas to the second gas storage unit 20. High-pressure gas in the first gas storage unit 9 and/or the first gas receiving apparatus is first used as blowback gas to conduct blowback on the drying unit 43, and the blowback gas passes through the drying unit 43 and the regeneration pipe 41, and is finally stored in the second gas storage unit 20, and is supplied to the second gas receiving apparatus and/or the third gas receiving apparatus for use.

In this example, in comparison with a manner in which the air compressor 4 supplies gas to the second gas storage unit 20, when the first gas storage unit 9 supplies gas to the second gas storage unit 20, due to a large volume, the first gas storage unit 9 can supply gas to the second gas storage unit 20 in time. This avoids frequent turning on and off of the gas generation unit, and sufficient gas can be supplied in a short time.

In addition, when the first gas receiving apparatus supplies gas to the second gas storage unit 20, the high-pressure gas in the first gas receiving apparatus can be stored as blowback gas by the second gas storage unit 20 and then reused, thereby improving utilization of this part of gas.

In addition, the adjustment apparatus for the seat is frequently used because of frequent turning during vehicle traveling. When blowback gas is supplied to the second gas receiving apparatus (for example, the second gas receiving apparatus is the adjustment apparatus for the seat) through the first gas storage unit, the side bolster is frequently inflated during frequent vehicle turning, that is, the first gas storage unit frequently inflates the side bolster. This increases a blowback frequency of the drying unit in unit time, and improves regeneration effect of the drying unit.

In a specific implementation, as shown in FIG. 1, the first gas receiving apparatus is the suspension apparatus, and the second gas receiving apparatus is the adjustment apparatus for the seat. The gas supply apparatus supplies gas to the first gas receiving apparatus through the first pipeline 100. The regeneration pipe 41 is directly or indirectly connected to the second gas receiving apparatus.

For example, the first pipeline 100 is connected to a distribution valve 7. The distribution valve 7 is configured to control turning on and off of the suspension apparatus and the first gas storage unit 9. For example, the suspension apparatus includes a plurality of air springs 6, for example, four air springs 6. The distribution valve 7 includes four air spring solenoid valves 5 corresponding to the air springs 6 and a gas storage unit solenoid valve 8 corresponding to the first gas storage unit 9. When the vehicle body is lifted, the air spring solenoid valves 5 and the gas storage unit solenoid valve 8 are opened, and high-pressure gas in the first gas storage unit 9 enters the four air springs 6, thereby increasing the height of the vehicle body. When the vehicle body needs to be lowered, the gas storage unit solenoid valve 8 is closed to exhaust gas in the air spring 6 out of a cabin. The cabin is, for example, a cockpit, or a luggage compartment.

In an example, as shown in FIG. 1, one end of the regeneration pipe 41 is connected to a gas intake pipe of the drying unit 43, the other end of the regeneration pipe 41 is connected to a third pipeline 300, and the third pipeline 300 is connected to the second gas storage unit 20.

One end of the gas intake pipe of the drying unit 43 is connected to the air compressor 4. The other end of the gas intake pipe of the drying unit 43 is connected to the gas inlet of the drying unit 43. The gas intake pipe of the drying unit 43 may be a part of the first pipeline 100, or may be an independently disposed pipeline.

As shown in FIG. 1, the regeneration pipe 41 bypasses the air compressor 4. One end of the regeneration pipe 41 is connected to the gas intake pipe of the drying unit 43. The other end of the regeneration pipe 41 is connected to a gas intake pipe of the air compressor 4. One end of the third pipeline 300 is connected to the second gas storage unit 20, and the other end is connected to the regeneration pipe 41. In this case, the third pipeline 300, the regeneration pipe 41, and the gas intake pipe of the air compressor 4 are connected. The regeneration pipe 41 prevents blowback gas from entering the air compressor 4, thereby avoiding damage to the air compressor 4.

In addition, the regeneration pipe 41 actually connects the gas intake pipe of the air compressor 4 and a gas exhaust pipe of the air compressor 4. This disposition manner can fully utilize original pipelines of the integrated adjustment system.

In an example, as shown in FIG. 1, a blowback control valve 42 is disposed on the regeneration pipe 41. The blowback control valve 42 controls opening and closing of the regeneration pipe 41.

When blowback needs to be conducted on the drying unit 43, the blowback control valve 42 is opened. When the drying unit 43 operates normally, the blowback control valve 42 is closed. For example, the blowback control valve 42 is a pneumatic valve, a solenoid valve, or the like.

In this example, the gas generation unit is connected to the first pipeline 100, the first pipeline 100 is connected to the first gas receiving apparatus, the drying unit 43 is disposed on the first pipeline 100, and a gas intake pipe 45 of the gas generation unit is connected to the second gas storage unit 20 through the third pipeline 300.

The blowback control valve 42 is disposed on the regeneration pipe 41, and the first gas storage unit 9 supplies gas to the second gas storage unit 20 through the first pipeline, the regeneration pipe 41, and the third pipeline.

In an example, the integrated adjustment system further includes a pilot solenoid valve 44, where a first end of the pilot solenoid valve 44 is connected to a gas exhaust pipe of the drying unit 43, a second end of the pilot solenoid valve 44 is connected to the blowback control valve 42 a third end of the pilot solenoid valve 44 is connected to the regeneration pipe 41.

The pilot solenoid valve is configured to control opening and closing of the blowback control valve 42blowback control valve. The pilot solenoid valve 44 is switched to a gas exhaust mode by using a current signal, and then a part of gas passes through the pilot solenoid valve 44 and a valve spool of the blowback control valve 42 is opened. In this case, a main gas exhaust circuit of the blowback control valve 42 is opened, and the blowback gas is exhausted from the gas exhaust circuit. The pilot solenoid valve 44 facilitates opening of the blowback control valve 42.

In an example, as shown in FIG. 1, one end of the regeneration pipe 41 is connected to the gas intake pipe of the drying unit 43, the other end of the regeneration pipe 41 is connected to the gas intake pipe 45 of the gas generation unit, the gas intake pipe 45 of the gas generation unit is connected to the third pipeline 300, and the third pipeline 300 is connected to the second gas storage unit 20.

In this example, the blowback gas from the drying unit 43 passes through the regeneration pipe 41, the gas intake pipe 45 of the gas generation unit, and the third pipeline 300, to reach the second gas storage unit 20, and is stored in the second gas storage unit 20 for use by the adjustment apparatus for the seat.

In other embodiments, the third pipeline 300 may alternatively be directly connected to the adjustment apparatus for the seat.

In an example, as shown in FIG. 1, the gas intake pipe 45 of the gas generation unit is connected to a second gas exhaust pipeline; and the suspension apparatus exhausts gas through the first pipeline 100, the regeneration pipe 41, the gas intake pipe 45 of the gas generation unit, and the second gas exhaust pipeline.

In this manner, the suspension apparatus can exhaust gas quickly, thereby decreasing the height of the vehicle body quickly. In addition, a gas pressure difference between the suspension apparatus and an external environment is large, improving regeneration efficiency of the drying unit.

In an example, as shown in FIG. 1, a second check valve 1 is disposed on the third pipeline 300, and the second check valve 1 is configured to allow gas to flow to the second gas storage unit 20. Disposition of the second check valve 1 can effectively prevent gas from flowing back into the air compressor 4 and the drying unit 43.

In an example, as shown in FIG. 1, a first check valve 2 is disposed on the gas intake pipe 45 of the gas generation unit, and the first check valve 2 is configured to allow gas to flow to the gas generation unit.

For example, the gas intake pipe 45 of the gas generation unit is used for gas intake of the air compressor 4. Gas passes through the gas intake pipe 45 of the gas generation unit to reach the air compressor 4. After being pressurized in the air compressor 4, the gas is supplied to the suspension apparatus or to the first gas storage unit 9 through the first pipeline 100.

In an example, as shown in FIG. 1, the second gas storage unit 20 is connected to the first gas storage unit 9, and the gas pressure of the second gas storage unit 20 is less than the gas pressure of the first gas storage unit 9.

In this example, the gas pressure of the second gas storage unit 20 is less than the gas pressure of the first gas storage unit 9, and therefore, gas can be supplied to the second gas storage unit 20 through the first gas storage unit 9. In comparison with a manner in which the air compressor 4 supplies gas to the second gas storage unit 20, due to a large volume, the first gas storage unit 9 can supply gas to the second gas storage unit 20 in time. This avoids frequent turning on and off of the air compressor 4, and sufficient gas can be supplied in a short time.

Preferably, as shown in FIG. 1, the second gas storage unit 20 is connected to the first gas storage unit 9 through the gas intake pipe 45, the regeneration pipe 41, and the first pipeline 100 of the gas generation unit. In this connection manner, the first gas storage unit 9 can supply gas to the second gas storage unit 20 only by controlling the opening and closing of the valve by using the original pipeline.

In an example, as shown in FIG. 1, the first gas storage unit 9 supplies gas to the second gas storage unit 20 through the first pipeline 100, the regeneration pipe 41, the gas intake pipe of the air compressor 4, and the third pipeline 300. In this example, the regeneration pipe 41 bypasses the air compressor 4 to connect the first pipeline 100 and the gas intake pipe of the air compressor 4. This prevents gas from entering the air compressor 4. It should be noted that, when the first gas storage unit 9 supplies gas to the second gas storage unit 20, the air compressor stops supplying gas to the first pipeline 100.

In an example, as shown in FIG. 1, the gas storage unit solenoid valve 8 and the blowback control valve 42 are configured to open when the gas pressure of the second gas storage unit 20 is less than a specified value.

In this manner, the gas storage unit solenoid valve and the blowback control valve 42 can effectively control the first gas storage unit 9 to supply gas to the second gas storage unit 20.

In an example, as shown in FIG. 1, a first pressure sensor 14 is disposed on the second pipeline 200, and the first pressure sensor 14 is configured to sense the gas pressure of the second gas storage unit 20.

When the gas pressure of the second gas storage unit 20 is less than a specified gas pressure, the air compressor 4 or the first gas storage unit 9 supplies gas to the second gas storage unit 20.

In an example, as shown in FIG. 1, the second gas storage unit 20 is connected to the adjustment apparatus for the seat through a second pipeline 200, a pressure limiting valve assembly is disposed on the second pipeline 200, and the pressure limiting valve assembly is configured to adjust gas pressure of the adjustment apparatus for the seat. The pressure limiting valve assembly can adjust the gas pressure of the second pipeline 200.

In an example, as shown in FIG. 1, the pressure limiting valve assembly includes a first pressure limiting valve 19 and a second pressure limiting valve 18, the first pressure limiting valve 19 is disposed on the second pipeline 200, the second pipeline 200 includes a gas exhaust branch pipe, and the second pressure limiting valve 18 is disposed on the gas exhaust branch pipe.

In this example, the gas pressure of the second gas storage unit 20 is greater than operating pressure of the adjustment apparatus for the seat. To match the operating pressure of the adjustment apparatus for the seat, the first pressure limiting valve 19 is disposed on the second pipeline 200. A person skilled in the art may select specifications of the first pressure limiting valve 19 according to the gas pressure of the second gas storage unit 20 and the working pressure of the adjustment apparatus for the seat. The gas exhaust branch pipe is used for exhausting gas from the second pipeline 200. The gas exhaust branch pipe directly exhausts gas to an external environment of the vehicle. For example, the second pressure limiting valve 18 is a solenoid valve or a pneumatic valve. When the second pipeline 200 exhausts gas, the second pressure limiting valve 18 is opened, so that gas in the airbag can be quickly exhausted. The second pressure limiting valve 18 disposed on the second pipeline 200 can exhaust gas more quickly.

In addition, due to disposition of the gas exhaust branch pipe and the second pressure limiting valve 18, when the first pressure limiting valve 19 fails, high-pressure gas can also be released through the second pressure limiting valve 18, to avoid damage to the adjustment apparatus for the seat caused by excessive gas pressure.

In an example, a gas pressure regulating valve assembly is disposed on the second pipeline 200, and the gas pressure regulating valve assembly is configured to adjust gas pressure of the adjustment apparatus for the seat. The adjustment apparatus for the seat includes an airbag. Inflation, deflation, and pressure maintenance of the airbag are controlled by using the gas pressure regulating valve assembly.

In a preferred example, the gas pressure regulating valve assembly includes a first valve and a second valve. The first valve has a first end, a second end, and a third end. The first end of the first valve is connected to the gas supply apparatus, the second end of the first valve is connected to the adjustment apparatus for the seat, and the third end of the first valve is connected to the first gas exhaust pipeline. The second valve is disposed on the first gas exhaust pipeline to control opening and closing of the first gas exhaust pipeline. The first end of the first valve, the second end of the first valve, and the third end of the first valve selectively communicate with each other.

The first valve and the second valve are solenoid valves, pneumatic valves, or the like. As shown in FIG. 1, the first valve is an intake solenoid valve 10, and the second valve is an exhaust solenoid valve 13. The adjustment apparatus for the seat includes a driver seat adjustment mechanism and a front passenger seat adjustment mechanism. A driver control valve 15 and a front passenger control valve 16 are disposed on the second pipeline 200, to control air paths of the driver seat adjustment mechanism and the front passenger seat adjustment mechanism respectively. Certainly, the driver control valve 15 and the front passenger control valve 16 may not be disposed to simplify the adjustment apparatus for the seat.

Each of the driver seat adjustment mechanism and the front passenger seat adjustment mechanism includes an airbag. For example, the airbag includes a left side bolster airbag 12 corresponding to a position of a left side bolster of the seat and a right side bolster airbag corresponding to a position of a right side bolster of the seat. The left side bolster airbag 12 and the right side bolster airbag adjust angles, heights, and the like of the left side bolster and the right side bolster of the seat respectively, to reduce a tilt of an occupant body.

The left side bolster airbag 12 of the driver seat adjustment mechanism is used as an example for description. When the vehicle turns right, the occupant is tilted to the left. In this case, the driver control valve 15 and the intake solenoid valve 10 are opened, and the exhaust solenoid valve 13 is closed. High-pressure gas in the second gas storage unit 20 passes through the first pressure limiting valve 19, the driver control valve 15, and the intake solenoid valve 10 to reach the left side bolster airbag 12, and the left side bolster airbag 12 expands after inflation, thereby changing an angle of the left side bolster to support the occupant, and reduce the tilt of the occupant to the left. When gas pressure of the left side bolster airbag 12 reaches a specified value, the intake solenoid valve 10 is closed, and the left side bolster airbag 12 maintains the pressure. When the vehicle returns to a straight line, a driver returns to an upright sitting position. In this case, the exhaust solenoid valve 13 is opened to exhaust gas from the left side bolster airbag 12, the left side bolster airbag 12 reduces in volume, and the left side bolster returns to an initial state.

In this example, this structure of the first valve simplifies a connection manner of the second valve, and facilitates assembly and disassembly of the adjustment apparatus for the seat.

In an example, as shown in FIG. 1, the gas generation unit is connected to the first pipeline 100, the first pipeline 100 is connected to the first gas receiving apparatus, the drying unit 43 is disposed on the first pipeline 100, and a gas intake pipe 45 of the gas generation unit is connected to the second gas storage unit 20 through the third pipeline 300.

The regeneration pipe 41 that connects the first pipeline 100 and the gas intake pipe 45 of the gas generation unit is also included. The blowback control valve 42 is disposed on the regeneration pipe 41, and the first gas storage unit 9 supplies gas to the second gas storage unit 20 through the first pipeline 100, the regeneration pipe 41, and the third pipeline 300.

In this example, as shown in FIG. 1, a gas outlet of the gas generation unit is connected to the first pipeline 100. The gas generation unit can supply gas to the suspension apparatus and the first gas storage unit 9 through the first pipeline 100. The third pipeline 300 is configured to supply gas to the second gas storage unit 20, and the like.

The regeneration pipe 41 connects the first pipeline 100 and the gas intake pipe 45 of the gas generation unit, and the gas intake pipe 45 of the gas generation unit is connected to the third pipeline 300, so that the first gas storage unit 9 bypasses the air compressor 4 to supply gas to the second gas storage unit 20 through blowback of the drying unit 43. A blowback control valve 42 is disposed on the regeneration pipe 41. The blowback control valve 42 is an electric valve or a pneumatic valve. Opening and closing of the regeneration pipe 41 is controlled by using the blowback control valve 42. When the first gas storage unit 9 supplies gas to the second gas storage unit 20, the first gas storage unit 9 supplies the gas to the second gas storage unit 20 through the first pipeline 100, the regeneration pipe 41, the gas intake pipe 45 of the gas generation unit, and the third pipeline 300.

In an example, the third pipeline 300 is connected to the second gas exhaust pipeline; and the suspension apparatus exhausts gas through the first pipeline 100, the regeneration pipe 41, the gas intake pipe 45 of the gas generation unit, and the second gas exhaust pipeline.

For example, an exhaust valve 3 is disposed on the second gas exhaust pipeline. The exhaust valve 3 is an electric valve or a pneumatic valve. The exhaust valve 3 is controlled to be opened to exhaust gas.

In an example, the second gas exhaust pipeline is connected to the suspension apparatus, and a gas outlet of the second gas exhaust pipeline is adapted to exhaust gas out of the cabin.

In an example, the integrated control system further includes a control apparatus. The control apparatus is configured to control gas intake, gas exhaust, and pressure maintenance of the suspension apparatus, the first gas storage unit 9, and the adjustment apparatus for the seat.

For example, a control apparatus controller, such as a vehicle controller, or a dedicated controller for the integrated adjustment apparatus, can control opening and closing of the air spring solenoid valve 5, the gas storage unit solenoid valve 8, the intake solenoid valve 10, the exhaust solenoid valve 13, the blowback control valve 42, the exhaust valve 3, and the second pressure limiting valve 18.

According to another embodiment of this application, an integrated adjustment system is provided. The system includes a suspension apparatus, an adjustment apparatus for a seat, a tire inflation apparatus, a gas supply apparatus, and a drying unit 43. The gas supply apparatus is connected to the drying unit 43. The drying unit 43 is connected to the suspension apparatus, to supply gas to the suspension apparatus. The drying unit 43 has a regeneration pipe. The regeneration pipe is configured to exhaust blowback gas from the drying unit 43, to supply gas to the adjustment apparatus for the seat and the tire inflation apparatus through the blowback gas.

In this example, the foregoing gas supply apparatus may be used. The adjustment apparatus for the seat is configured to adjust a side bolster of a seat, to adjust a posture of an occupant when a vehicle turns, reducing a tilt of the occupant and improving driving experience. The suspension apparatus is configured to adjust a height of a vehicle body based on a road condition, to ensure passability of the vehicle, reduce the wind resistance of the vehicle, and the like. The tire inflation apparatus is configured to inflate a tire.

In this example, the adjustment apparatus for the seat, the tire inflation apparatus and the suspension apparatus share a gas supply apparatus. This significantly reduces the total volume of the integrated adjustment system, saves the interior space in the vehicle, and reduces vehicle costs.

In addition, the suspension apparatus and the tire inflation apparatus are used much less frequently than the adjustment apparatus for the seat. The integrated adjustment apparatus can ensure a higher use frequency of the gas supply apparatus and avoid idle losses of the gas supply apparatus due to long-term non-use.

In addition, the suspension apparatus usually adjusts the height of the vehicle body when the vehicle is static or adjusts the height of the vehicle body as a vehicle speed changes during straight-line traveling. The adjustment apparatus for the seat is usually used when the vehicle turns. Therefore, functions of the suspension apparatus and the adjustment apparatus for the seat do not overlap each other in use time, thereby maximizing use of the gas supply apparatus.

In addition, both operation of the suspension apparatus and operation of the adjustment apparatus for the seat are related to a motion status of the vehicle. Therefore, control of the suspension apparatus and the adjustment apparatus for the seat may be implemented through coordinated control of a plurality of functional modules (for example, a plurality of solenoid valves and pressure sensors) by using one control apparatus, to better schedule a resource of the control apparatus and coordinate a control strategy.

In addition, for the suspension apparatus, the tire inflation apparatus, and the adjustment apparatus for the seat, control is triggered based on a position status of the vehicle and an acceleration status of the vehicle. Therefore, a vehicle signal needs to be sent only once and does not need to be sent a plurality of times, further saving a computing resource of a vehicle control apparatus and improving running efficiency of a vehicle system.

In addition, three systems may be controlled by using one control apparatus, for example, functions of the adjustment apparatus for the seat and the tire inflation apparatus may be integrated into a control apparatus of the suspension apparatus. Therefore, there is no need to provide three independent control apparatuses, further reducing the vehicle costs.

According to a third embodiment of this application, a vehicle is provided. The vehicle includes the foregoing integrated adjustment system.

The vehicle is characterized by a high integration level and can adjust a seat and a height of a vehicle body.

Specifically, (1) height adjustment of the vehicle body performed when the vehicle is static: used to automatically adjust the height of the vehicle body based on an occupant in the vehicle or a weight of the vehicle, to maintain a required height for vehicle traveling and a stable traveling status of the vehicle. Height adjustment of the vehicle body may be height adjustment of air springs 6 corresponding to all wheels of the vehicle, or height adjustment of an air spring 6 corresponding to only one wheel.

For an operating condition for height adjustment of the air springs 6 corresponding to all the wheels of the vehicle, when the vehicle body needs to be lifted, a blowback control valve 42 is closed, four air spring solenoid valves 5 corresponding to the air springs 6 and a gas storage unit solenoid valve 8 corresponding to a first gas storage unit 9 in a distribution valve 7 are opened, and high-pressure gas in the first gas storage unit 9 enters the four air springs 6, further increasing the height of the vehicle body. When the vehicle body needs to be lowered, the gas storage unit solenoid valve 8 is closed. The blowback control valve 42 is opened, and gas in the air springs 6 is exhausted out of a cockpit through an exhaust valve 3.

For an operating condition for height adjustment of the air spring 6 corresponding to the only one wheel, an air spring solenoid valve 5 and a gas storage unit solenoid valve 8 that correspond to a wheel at a position that requires lifting. In this case, the high-pressure gas in the first gas storage unit 9 enters an air spring 6 corresponding to the air spring solenoid valve 5, and the air spring 6 extends, so that a part of a vehicle body corresponding to the wheel is lifted. When the vehicle body needs to be lowered, the gas storage unit solenoid valve 8 is closed. The blowback control valve 42 is opened, and gas in the air spring 6 passes through the air spring solenoid valve 5, the blowback control valve 42, and the exhaust valve 3, and is exhausted out of the cockpit. Alternatively, gas in the air spring 6 passes through the air spring solenoid valve 5, the blowback control valve 42, and a second check valve 1, and is stored in a second gas storage unit 20.

(2) Control of the height the vehicle body during vehicle traveling: used to improve directional stability of the vehicle during high-speed traveling. When a controller determines that a vehicle speed of the vehicle during straight-line traveling reaches or exceeds a specified vehicle speed, the controller sends a control signal to increase damping force of an electrically controlled shock absorber, and controls the distribution valve 7 to exhaust gas from the air spring 6 to decrease the height of the vehicle body, thereby reducing wind resistance and a center of gravity of the vehicle body, and improving handling stability during high-speed traveling. In this case, the blowback control valve 42 and all the air spring solenoid valves 5 are opened, and gas in the air springs 6 passes through the air spring solenoid valves 5, the blowback control valve 42, and the exhaust valve 3, and is exhausted out of the cockpit, to decrease the height of the vehicle body. Alternatively, the gas in the air spring 6 passes through the air spring solenoid valve 5, the blowback control valve 42, and the second check valve 1, and is stored in the second gas storage unit 20.

When the vehicle speed of the vehicle during straight-line traveling drops below the specified vehicle speed, the blowback control valve 42 is closed, and the gas storage unit solenoid valve 8 and all the air spring solenoid valves 5 are opened, to re-inflate the four air springs 6 to increase the height of the vehicle body.

(3) Overload protection of the suspension apparatus: setting maximum allowable gas pressure for the suspension apparatus in ECU. If gas pressure of the air springs 6 is greater than or equal to the maximum allowable gas pressure, gas is exhausted from the air spring 6 and the height of the vehicle body is decreased. In this case, the blowback control valve 42 and all air spring solenoid valves 5 are opened, and gas in air springs 6 passes through the air spring solenoid valves 5, the blowback control valve 42, and the exhaust valve 3, and is exhausted out of the cockpit, to decrease the height of the vehicle body. Alternatively, gas in the air spring 6 passes through the air spring solenoid valve 5, the blowback control valve 42, and a second check valve 1, and is stored in a second gas storage unit 20.

If the vehicle needs to return to a normal state, for example, the gas pressure of the air springs 6 is less than the maximum allowable gas pressure, a load of the vehicle needs to be reduced, for example, overloaded cargo is unloaded, and when the gas pressure of the air springs 6 is less than the maximum allowable gas pressure, the vehicle is restarted, and the vehicle returns to the normal state.

(4) Steering support of a side bolster of the seat: used to improve lateral stability of the occupant in the vehicle relative to the seat when the vehicle body is subjected to lateral force. When the vehicle turns, for example, when at least one of lateral acceleration, a roll angle, or a roll angular velocity is greater than or equal to a specified value, a driver control valve 15 and a corresponding intake solenoid valve 10 are opened, and a corresponding exhaust solenoid valve 13 is closed. High-pressure gas in the second gas storage unit 20 passes through a first pressure limiting valve 19, the driver control valve 15, and the corresponding intake solenoid valve 10, to enter an airbag, for example, a left side bolster airbag 12, to support the waist of the occupant and avoid a tilt of the occupant. When at least one of the lateral acceleration, the roll angle, and the roll angular velocity of the vehicle is less than the specified value, the intake solenoid valve 10 is closed, the exhaust solenoid valve 13 is opened, and gas in the airbag (for example, the left side bolster airbag 12) is exhausted out of the cockpit, and the left side bolster of the seat no longer provides support.

It should be noted that, in the foregoing use modes, opening and closing of different valves are controlled by the controller. Preferably, when the suspension apparatus operates, the first gas storage unit 9 supplies gas only to the suspension apparatus and stops supplying gas to the adjustment apparatus for the seat; when the adjustment apparatus for the seat operates, the second gas storage unit 20 supplies gas only to the adjustment apparatus for the seat, and the first gas storage unit 9 or an air compressor 4 stops supplying gas to the second gas storage unit 20.

According to a fourth embodiment of this application, a vehicle is provided. The vehicle includes the foregoing integrated adjustment system. A first pressure limiting valve 19 is disposed on the second pipeline 200, the adjustment apparatus for the seat includes an airbag that is located behind a side bolster of the seat, the airbag is connected to the second pipeline 200, and a first valve and a second valve are disposed on the second pipeline 200, the first valve can control gas intake to the airbag, and the second valve is configured to control gas exhaust from the airbag.

The first pressure limiting valve 19 and the first valve are configured to open when obtaining a signal indicating the vehicle turns, to inflate the airbag behind the side bolster on a tilted side.

In this example, an intake valve is an intake solenoid valve 10, and an exhaust valve is an exhaust solenoid valve 13. When the vehicle turns right, an occupant body is tilted to the left. After obtaining a signal indicating a right turn, a controller sends a control signal, so that a driver control valve 15 and a corresponding intake solenoid valve 10 are opened and a corresponding exhaust solenoid valve 13 is closed. High-pressure gas in a second gas storage unit 20 passes through the first pressure limiting valve 19, the driver control valve 15, and the corresponding intake solenoid valve 10 to enter the airbag, for example, a left side bolster airbag 12, to support the waist of an occupant and avoid a tilt of the occupant.

In an example, the second valve is configured to open when obtaining a signal indicating that the vehicle no longer turns. For example, when obtaining that the vehicle travels straight or stops, a controller sends a control signal to open the exhaust solenoid valve 13, to exhaust gas from the left side bolster airbag 12, and the left side bolster returns to an initial state.

Preferably, the signal includes at least one of lateral acceleration, a roll angle, or a roll angular velocity. The foregoing signal enables the controller to accurately determine a status of the vehicle to accurately control operation of the integrated adjustment system.

In the foregoing embodiments, differences between embodiments are mainly described. Different optimization features between embodiments may be combined into a better embodiment, provided that there is no contradiction. For brevity, details are not described herein again.

Although some specific embodiments of this application are described in detail by using examples, a person skilled in the art should understand that the foregoing examples are merely for description, but are not intended to limit the scope of this application. A person skilled in the art should understand that modifications may be made to the foregoing embodiments without departing from the spirit and scope of this application. The scope of this application is limited only by the appended claims.

## Claims

1. An integrated adjustment system for a vehicle, wherein the integrated adjustment system comprises:
a first gas receiving apparatus and a second gas receiving apparatus, the first gas receiving apparatus being configured to implement a first function, the second gas receiving apparatus being configured to implement a second function, and the first function being different from the second function;
a gas supply apparatus; and
a drying unit (43), the gas supply apparatus being connected to the drying unit (43), the drying unit (43) being connected to the first gas receiving apparatus, a regeneration pipe (41) being disposed in the drying unit (43), and the regeneration pipe (41) being configured to exhaust blowback gas from the drying unit (43), to supply gas to the second gas receiving apparatus through the blowback gas.

2. The integrated adjustment system according to claim 1, further comprising a third gas receiving apparatus, wherein the regeneration pipe (41) is configured to exhaust the blowback gas from the drying unit (43), to supply gas to the third gas receiving apparatus through the blowback gas, the third gas receiving apparatus is configured to implement a third function, and the third function is different from the first function and the second function.

3. The integrated adjustment system according to claim 2, wherein each of the first gas receiving apparatus, the second gas receiving apparatus, and/or the third gas receiving apparatus is a component of the vehicle.

4. The integrated adjustment system according to claim 2, wherein the first gas receiving apparatus is one or more of the following: a suspension apparatus, an adjustment apparatus for a seat, and a tire inflation apparatus;
the second gas receiving apparatus is one or more of the following: the suspension apparatus, the adjustment apparatus for the seat, and the tire inflation apparatus; and
the third gas receiving apparatus is one or more of the following: the suspension apparatus, the adjustment apparatus for the seat, and the tire inflation apparatus.

5. The integrated adjustment system according to any one of claims 1 to 4, wherein the gas supply apparatus comprises a gas generation unit and a first gas storage unit (9), the gas generation unit is configured to supply gas to the first gas storage unit (9) through the drying unit (43), and the blowback gas from the drying unit (43) is from the first gas receiving apparatus and/or the first gas storage unit (9).

6. The integrated adjustment system according to any one of claims 1 to 4, wherein the gas supply apparatus comprises a gas generation unit, a first gas storage unit (9), and a second gas storage unit (20); the gas generation unit supplies gas to the first gas storage unit (9) through the drying unit (43); the first gas receiving apparatus and/or the first gas storage unit (9) are/is configured to supply the blowback gas to the second gas storage unit (20) and/or the second gas receiving apparatus through the regeneration pipe (41).

7. The integrated adjustment system according to claim 6, wherein the first gas receiving apparatus is the suspension apparatus and the second gas receiving apparatus is the adjustment apparatus for the seat.

8. The integrated adjustment system according to claim 7, wherein one end of the regeneration pipe (41) is connected to a gas intake pipe of the drying unit 43, the other end of the regeneration pipe (41) is connected to a gas intake pipe (45) of the gas generation unit, the gas intake pipe (45) of the gas generation unit is connected to a third pipeline (300), and the third pipeline (300) is connected to the second gas storage unit (20).

9. The integrated adjustment system according to claim 8, wherein the second gas storage unit (20) is connected to the adjustment apparatus for the seat through a second pipeline (200), a gas pressure regulating valve assembly is disposed on the second pipeline (200), and the gas pressure regulating valve assembly is configured to adjust gas pressure of the adjustment apparatus for the seat.

10. The integrated adjustment system according to claim 8, wherein a blowback control valve (42) is disposed on the regeneration pipe (41).

11. The integrated adjustment system according to claim 10, further comprising a pilot solenoid valve (44), wherein a first end of the pilot solenoid valve (44) is connected to a gas exhaust pipe of the drying unit (43), a second end of the pilot solenoid valve (44) is connected to the blowback control valve (42), and a third end of the pilot solenoid valve (44) is connected to the regeneration pipe (41).

12. The integrated adjustment system according to claim 7, wherein the gas generation unit is connected to a first pipeline (100), the first pipeline (100) is connected to the first gas receiving apparatus, the drying unit (43) is disposed on the first pipeline (100), and a gas intake pipe (45) of the gas generation unit is connected to the second gas storage unit (20) through a third pipeline (300); and
the regeneration pipe (41) is further configured to connect the first pipeline (100) and the gas intake pipe (45) of the gas generation unit, a blowback control valve (42) is disposed on the regeneration pipe (41), and the first gas storage unit (9) supplies gas to the second gas storage unit (20) through the first pipeline (100), the regeneration pipe (41), the gas intake pipe (45) of the gas generation unit, and the third pipeline (300).

13. The integrated adjustment system according to claim 7, wherein the gas generation unit is connected to a first pipeline (100), the first pipeline (100) is connected to the first gas receiving apparatus, and the drying unit (43) is disposed on the first pipeline (100); and
one end of the regeneration pipe (41) is connected to a gas intake pipe of the drying unit; the other end of the regeneration pipe (41) is connected to a gas intake pipe (45) of the gas generation unit; the gas intake pipe (45) of the gas generation unit is connected to a second gas exhaust pipeline; and the suspension apparatus exhausts gas through the first pipeline (100), the regeneration pipe (41), the gas intake pipe (45) of the gas generation unit, and the second gas exhaust pipeline.

14. The integrated adjustment system according to claim 12, wherein a second check valve (1) is disposed on the third pipeline (300), and the second check valve (1) is configured to allow gas to flow to the second gas storage unit (20).

15. The integrated adjustment system according to claim 14, wherein a first check valve (2) is disposed on the gas intake pipe (45) of the gas generation unit, and the first check valve (2) is configured to allow gas to flow to the gas generation unit.

16. The integrated adjustment system according to claim 7, wherein gas pressure of the second gas storage unit (20) is less than gas pressure of the first gas storage unit (9).

17. The integrated adjustment system according to claim 12, wherein a gas storage unit solenoid valve (8) is disposed on the first pipeline (100), the gas storage unit solenoid valve (8) is configured to open when gas pressure of the second gas storage unit (20) is less than a specified value.

18. The integrated adjustment system according to claim 7, wherein the regeneration pipe (41) is a blowback outlet of the drying unit (43).

19. An integrated adjustment system, wherein the integrated adjustment system comprises a suspension apparatus, an adjustment apparatus for a seat, a tire inflation apparatus, a gas supply apparatus, and a drying unit (43); the gas supply apparatus is connected to the drying unit (43), the drying unit (43) is connected to the suspension apparatus, the drying unit (43) has a regeneration pipe (41), and the regeneration pipe (41) is configured to exhaust blowback gas from the drying unit (43), to supply gas to the adjustment apparatus for the seat and the tire inflation apparatus through the blowback gas.

20. A vehicle, wherein the vehicle comprises the integrated adjustment system according to any one of claims 1 to 19.

21. A vehicle, wherein the vehicle comprises the integrated adjustment system according to claim 9, a first pressure limiting valve (19) is disposed on the second pipeline (200), the adjustment apparatus for the seat comprises an airbag that is located behind a side bolster of the seat, the airbag is connected to the second pipeline (200), and a first valve and a second valve are disposed on the second pipeline (200), the first valve is configured to control gas intake to the airbag, and the second valve is configured to control gas exhaust from the airbag; and
the first pressure limiting valve (19) and the first valve are configured to open when obtaining a signal indicating the vehicle turns, to inflate the airbag behind the side bolster on a tilted side.

22. The vehicle according to claim 21, wherein the second valve is configured to open when obtaining a signal indicating that the vehicle no longer turns.

23. The vehicle according to claim 21 or 22, wherein the signal comprises at least one of lateral acceleration, a roll angle, or a roll angular velocity.
